**Europäisches Patentamt**

**European Patent Office**

**Office européen des brevets**

(19)

(11) Veröffentlichungsnummer : **0 476 179 B1**

## (12) EUROPÄISCHE PATENTSCHRIFT

(45) Veröffentlichungstag der Patentschrift :
**28.06.95 Patentblatt 95/26**

(51) Int. Cl.$^6$ : **G21C 3/322**

(21) Anmeldenummer : **90118212.1**

(22) Anmeldetag : **21.09.90**

(54) Reaktorkern eines Kernreaktors und Einsatzelement für einen Reaktorkern.

(43) Veröffentlichungstag der Anmeldung :
**25.03.92 Patentblatt 92/13**

(45) Bekanntmachung des Hinweises auf die
Patenterteilung :
**28.06.95 Patentblatt 95/26**

(84) Benannte Vertragsstaaten :
**BE DE ES FR GB SE**

(56) Entgegenhaltungen :
**EP-A- 0 181 264**
**EP-A- 0 304 724**
**FR-A- 2 191 210**

(56) Entgegenhaltungen :
**FR-A- 2 302 570**
**IAEA-SM-288/26, PROCEEDINGS OF A SYM-POSIUM, Stockholm, 15. - 19. September 1986, Seiten 43-56; R.W. HOLZER et al.: "Progress in the design of fuel assemblies for LWRs"**

(73) Patentinhaber : **SIEMENS AKTIENGESELLSCHAFT**
**Wittelsbacherplatz 2**
**D-80333 München (DE)**

(72) Erfinder : **Zimmermann, Reinhart, Dr. Dipl.-Phys.**
**Ahornweg 5**
**D-8525 Uttenreuth (Weiher) (DE)**

EP 0 476 179 B1

**Beschreibung**

Die Erfindung betrifft einen Reaktorkern eines Kernreaktors nach dem Oberbegriff des Patentanspruches 1 und ein Einsatzelement für einen Reaktorkern entsprechend dem Oberbegriff des Patentanspruches 2.

In einem solchen Reaktorkern befinden sich beispielsweise Einsatzelemente mit quadratischen gitterförmigen Abstandhaltern. Ihre Stäbe sind parallel zueinander und ihre Querschnitte wie die Felder eines Schachbrettes angeordnet. Die Einsatzelemente haben Abstandhalter jeweils in gleicher Höhe, so daß sich zwei benachbarte Einsatzelemente mit den Außenstegen ihrer jeweils in gleicher Höhe befindlichen Abstandhalter flächig überdeckend berühren.

Aus International Atomic Energy Agency: "International Symposium on Improvements in Water Reactor Fuel Technology and Utilization", Stockholm, Sweden, 15-19 September 1986, IAEA-SM-288/26 ist bekannt, für Brennelemente als Einsatzelemente für den Reaktorkern eines Druckwasserkernreaktors quadratische gitterförmige Abstandhalter vorzusehen, die an den Kanten der Außenstege sowohl an dem An- als auch an dem Abströmende an den Auftreffstellen von Innenstegen flache Fahnen mit trapezartiger Kontur aufweisen, die in bezug auf den an der betreffenden Auftreffstelle auftreffenden Innensteg symmetrisch sind. Diese flachen Fahnen sind um die Kante des betreffenden Außensteges gebogen und zur Innenseite dieses Außensteges hin geneigt. Diese Fahnen sollen ein gegenseitiges Verhaken von Brennelementen an den Abstandhaltern beim Be- und Entladen des Reaktorkerns verhindern.

Im Reaktorkern des Druckwasserkernreaktors befinden sich jeweils zwei solcher Fahnen, von denen jede an einem von zwei aneinander anliegenden Außenstegen angebracht ist, einander gegenüber. In diesem Reaktorkern werden die Kernreaktorbrennelemente von flüssigem Wasser als Kühlmittel in Längsrichtung ihrer Brennstäbe durchströmt, und die sich gegenüber befindlichen Fahnen an den Kanten aneinander anliegender Außenstege befinden sich in Strömungskanälen für das Kühlmittel. Diese Strömungskanäle werden von den Brennstäben und gegebenenfalls von Brennstäben und Steuerstabführungsrohren gebildet, die in den von den Innenstegen an den Außenstegen der Abstandhalter gebildeten quadratischen Maschen angeordnet sind.

Der Erfindung liegt die Aufgabe zugrunde, Reaktorkern und Einsatzelement für einen Reaktorkern weiterzubilden und einen geringen Druckverlust für den Reaktorkern durchströmendes Kühlmittel und eine hohe Wärmeabfuhr von den Brennstäben im Reaktorkern an dieses Kühlmittel zu erzielen.

Zur Lösung dieser Aufgabe hat ein Reaktorkern der eingangs erwähnten Art erfindungsgemäß die Merkmale des kennzeichnenden Teiles des Patentanspruches 1 und ein Einsatzelement für einen Reaktorkern erfindungsgemäß die Merkmale des kennzeichnenden Teiles des Patentanspruches 2.

Aufgrund ihrer Auskehlungen setzen die Fahnen an den Kanten auf der Abströmseite der Abstandhalter in diesem Reaktorkern einem Kühlmittel, das in Längsrichtung der Brennstäbe durch den Reaktorkern strömt, nur geringen Strömungswiderstand entgegen. Außerdem bewirken diese Fahnen das Entstehen zweier entgegengesetzt gerichteter und parallel zueinander verschobener Impulse rechtwinklig zur Durchströmungsrichtung des Kühlmittels durch den Reaktorkern, so daß sich ein Drall im Kühlmittel ausbildet. Dieser Drall bewirkt eine zusätzliche Umlaufströmung des Kühlmittels, und kaltes Kühlmittel gelangt ständig aus dem Zentrum der Strömungskanäle an die heißen Oberflächen der Brennstäbe in den Maschen an den Außenstegen der gitterförmigen Abstandhalter.

Die Patentansprüche 3 bis 18 sind auf Weiterbildungen des Einsatzelementes gerichtet, durch die der Strömungswiderstand im Reaktorkern noch weiter verringert und der Wärmeübergang an das Kühlmittel im Reaktorkern noch weiter verbessert werden.

Die Weiterbildungen nach den Patentansprüchen 11 und 12 sowie 15 bis 18 haben ferner den Vorteil, daß wegen der zum auftreffenden Innensteg symmetrischen Fahnen an den Auftreffstellen R = 1 und R = N, die sich ja jeweils am nächsten zu Abstandhalterecken befinden, ein Verhaken von Einsatzelementen an diesen Abstandhalterecken beim Be- und Entladen eines Reaktorkernes vermieden werden.

Die Erfindung und ihre Vorteile seien anhand der Zeichnung an Ausführungsbeispielen näher erläutert:

FIG 1 zeigt stark schematisiert in Seitenansicht ein Kernreaktorbrennelement für einen Druckwasserkernreaktor.

FIG 2 zeigt in Draufsicht einen Ausschnitt des Abströmendes von zwei sich im Reaktorkern eines Druckwasserkernreaktors in gleicher Höhe gegenüber befindlichen gitterförmigen Abstandhaltern von zwei in diesem Reaktorkern nebeneinander angeordneten Kernreaktorbrennelementen.

FIG 3 zeigt in Seitenansicht einen Außensteg für die beiden gitterförigen Abstandhalter nach FIG 2.

FIG 4 zeigt in Draufsicht zwei sich gegenüber befindliche Fahnen nach FIG 2.

FIG 5 und FIG 6 zeigen in Draufsicht auf die Abströmenden zwei weitere Ausführungsformen von zu zwei Kernreaktorbrennelementen gehörenden Abstandhaltern, die im Reaktorkern eines Druckwasserkernreaktors in gleicher Höhe mit sich flächig überdeckenden Außenstegen nebeneinander angeordnet sind.

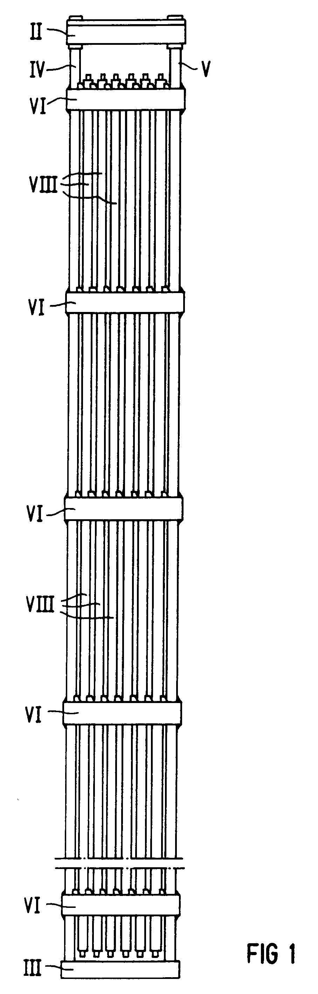

Das für einen Druckwasserkernreaktor bestimmte Kernreaktorbrennelement nach FIG 1 weist zwei quadratische Halteplatten II und III aus Metall auf. Ferner sind zwei zueinander parallele Haltestäbe IV und V, z.B. Steuerstabführungsrohre, aus Metall erkennbar, deren Längsachsen die beiden zueinander parallelen Halteplatten II und III in einem Winkel von 90° durchdringen und die an jedem Ende jeweils an einer der beiden Halteplatten II und III festgeschraubt sind. Jeder der beiden Haltestäbe IV und V ist durch eine Masche in quadratischen gitterförmigen Abstandhaltern VI aus Metall geführt, die sich in Längsrichtung der Haltestäbe IV und V gesehen zwischen den beiden Halteplatten II und III befinden und die an den Haltestäben IV und V formschlüssig gehalten sind. Durch andere Maschen der Abstandhalter VI ist jeweils ein zu den Haltestäben IV und V paralleler Brennstab VIII geführt, der im wesentlichen aus einem mit Kernbrennstoff gefüllten Hüllrohr aus Metall besteht, das an beiden Seiten gasdicht verschlossen ist. Die Brennstäbe VIII sind an keiner der beiden Halteplatten II und III befestigt, sondern sie sind in den Maschen der Abstandhalter VI elastisch, d.h. kraftschlüssig durch Noppen und Federn der Abstandhalter VI gehalten und haben zwischen den beiden Halteplatten II und III in Richtung ihrer Längsachse Spiel. Sie können sich deshalb in Richtung ihrer Längsachse, d.h. in Längsrichtung des Kernreaktorbrennelementes, ungehindert ausdehnen.

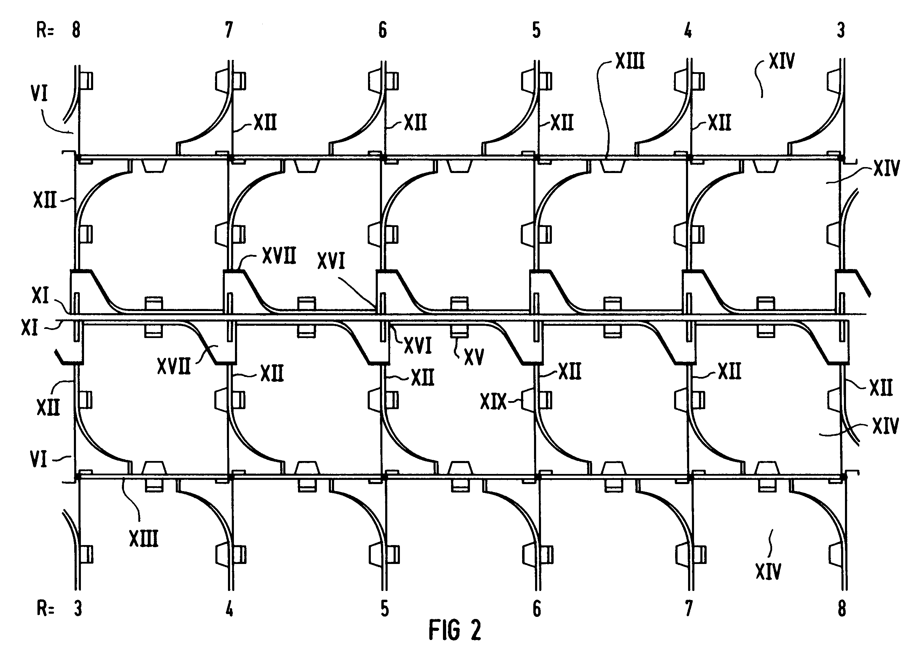

Im Reaktorkern eines Druckwasserreaktors sind eine Reihe von Kernreaktorbrennelementen nach FIG 1 mit vertikalen, zueinander parallelen Brennstäben VIII stehend angeordnet. Die Querschnitte dieser Kernreaktorbrennelemente und damit auch die Querschnitte ihrer quadratischen gitterförmigen Abstandhalter VI sind wie die Felder eines Schachbrettes angeordnet. Die Abstandhalter VI aller Kernreaktorbrennelemente entsprechend FIG 1 befinden sich in dem Reaktorkern in gleicher Höhe, so daß die in FIG 2 erkennbaren Außenstege XI der Abstandhalter VI zweier verschiedener Kernreaktorbrennelemente sich überdeckend flach und eng nebeneinander stehen oder auch flach aneinander anliegen. Diese in gleicher Höhe nebeneinander angeordneten Abstandhalter VI sind gleich ausgebildet und haben neben vier hochkant angeordneten Außenstegen, die paarweise zueinander parallel sind und von denen nur jeweils ein einziger Außensteg XI in FIG 2 erkennbar ist, sich rechtwinklig hochkant durchsetzende, äquidistante Innenstege XII und XIII, die quadratische Maschen XIV für die in FIG 2 nicht dargestellten Brennstäbe VIII und die Haltestäbe IV und V bilden. Die Außenstege haben im wesentlichen gleichen Abstand vom jeweils benachbarten parallelen Innensteg XII bzw. XIII. Dieser Abstand entspricht dem Abstand, den zwei der äquidistanten Innenstege XII bzw. XIII voneinander haben.

In den Maschen XIV in FIG 2 sind Haltefedern XV bzw. Anlagenoppen XIX für die Brennstäbe VIII erkennbar. Haltefedern XV und Anlagenoppen XIX sind an den Innenstegen XII und XIII und Haltefedern XV an den Außenstegen XI ausgebildet.

Ein Innensteg XII des einen Abstandhalters VI und ein Innensteg XII des anderen Abstandhalters VI in FIG 2 befinden sich jeweils in derselben Ebene, die einen rechten Winkel mit der Zeichenebene und den Außenstegen XI bildet. In jedem der beiden Abstandhalter VI hat der jeweilige Innensteg XII eine Auftreffstelle XVI am Außensteg XI.

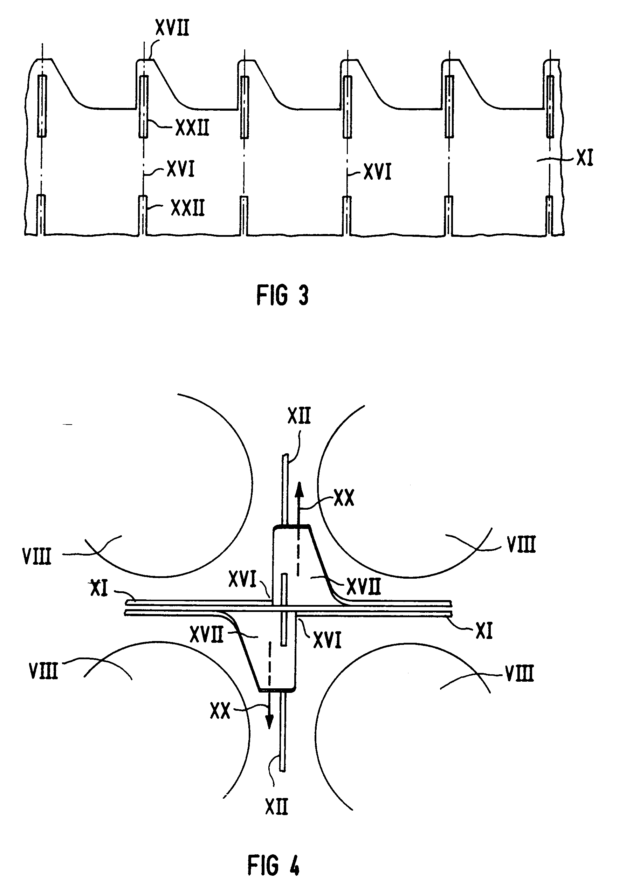

Wie FIG 3 zeigt, hat ein Außensteg XI seitlich an den Auftreffstellen XVI Einsteckschlitze XXII, in die jeweils ein auftreffender Innensteg XII mit einer Zunge greift und an denen diese Innenstege XII mit dem Außensteg XI verschweißt sind.

Die Auftreffstellen XVI an jedem Außensteg XI sind äquidistant d.h. haben gleichen Abstand voneinander. Die Kante der Außenstege XI an dem in FIG 2 dargestellten Abströmende der beiden Abstandhalter VI weist an den Auftreffstellen XVI der Innenstege XII jeweils eine Fahne XVII auf. Diese Fahnen XVII sind an beiden Abstandhaltern VI gleich ausgebildet.

In FIG 4 sind die beiden sich überdeckend flach und eng nebeneinander stehenden Außenstege XI und jeweils ein Innensteg XII der beiden Abstandhalter VI nach FIG 2 erkennbar. Beiderseits eines jeden dieser beiden in derselben Ebene senkrecht zur Zeichenebene befindlichen Innenstege XII ist jeweils der Querschnitt eines Brennstabes VIII zu sehen.

An jedem der Außenstege XI ist an der Auftreffstelle XVI an der Kante am Abströmende der Abstandhalter VI eine Fahne XVII unter Bildung eines Fahnenpaares angeordnet. Jede dieser Fahnen XVII dieses Fahnenpaares ist zur Innenseite des Steges XI hin geneigt, an dem sie angebracht ist. Auf dieser Innenseite befinden sich auch die jeweiligen Innenstege XII des betreffenden Abstandhalters VI.

Die Flanke jeder Fahne XVII ist, wie FIG 4 zeigt, auf einer Seite des Innensteges XII des Abstandhalters stärker ausgekehlt als die Flanke dieser Fahne XVII auf der anderen Seite dieses Innensteges XII. Im Falle von FIG 4 ist die stärkere Auskehlung in Form eines rechten Winkels geschnitten, dessen einer Schenkel durch die Kante des betreffenden Außensteges XI gebildet ist und dessen anderer Schenkel parallel zum Innensteg XII ausgebildet ist. Der andere Schenkel ist zu der durch die Seite dieses Innensteges XII bestimmten Ebene parallel oder befindet sich in der durch diese Seite des Innensteges XII bestimmten Ebene. Außerdem befindet sich in FIG 4 die stärker ausgekehlte Flanke der einen Fahne XVII gegenüber der schwächer ausgekehlten Flanke der anderen Fahne XVII und umgekehrt. An der schwächer ausgekehlten Flanke kann die Kante einer Fahne XVII auch geradlinig ausgebildet sein und ausgehend von der Kante des Außensteges XI zum auftreffenden Innensteg XII hin geneigt sein.

Von der Unterseite der Zeichenebene der FIG 4 zur Oberseite durchströmendes flüssiges Kühlmittel erhält von jeder der beiden Fahnen XVII nach FIG 4 einen Impuls XX. Beide Impulse XX sind rechtwinklig zur Durchströmungsrichtung und zu den Außenstegen XI und von diesen Außenstegen XI weggerichtet. Diese Impulse XX bewirken eine zusätzliche Drallströmung des flüssigen Kühlmittels zwischen den vier Brennstäben VIII ab dem Abströmende der beiden gitterförmigen Abstandhalter VI im Kernreaktorbrennelement. Diese Drallströmung fördert kaltes Kühlmittel aus dem Zentrum des von den vier Brennstäben VIII gebildeten Strömungskanals zu dem heißen Mantel der Brennstäbe VIII und begünstigt so die Wärmeabfuhr von diesen Brennstäben VIII.

Haben z.B. zum Einsetzen in einen bestimmten Reaktorkern vorgesehene Kernreaktorbrennelemente gleichen Elementquerschnitt und in gleicher Höhe angebrachte quadratische gitterförmige Abstandhalter mit gleichem Abstandhalterquerschnitt und haben diese gitterförmigen Abstandhalter z.B. N=10 hochkant angeordnete erste Innenstege und N=10 hochkant angeordnete zweite Innenstege, die die ersten Innenstege rechtwinklig durchsetzen, so hat jeder Außensteg XI eines Abstandhalters VI N=10 äquidistante Auftreffstellen XVI von Innenstegen XII. Diese Auftreffstellen XVI sind ausgehend jeweils von einem Stegende des betreffenden Außensteges XI in einem vorgegebenen Umlaufsinn um den Abstandhalter VI gezählt.

Befindet sich bei beiden in gleicher Höhe angeordneten Abstandhaltern VI zweier Kernreaktorbrennelemente in FIG 2 beispielsweise eine erste wie in Figur 4 ausgebildete Fahne XVII an einer Auftreffstelle R=4 eines Innensteges XII an den betreffenden Außensteg XI und befindet sich ferner bei beiden Abstandhaltern VI eine zweite wie in Figur 4 ausgebildete Fahne XVII an einer Auftreffstelle N-R+1=10-4+1=7 an demselben Außensteg XI wie die erste Fahne XVII und sind die Flanken dieser beiden Fahnen XVII in dem vorgegebenen (somit für beide Abstandhalter VI gleichen) Umlaufsinn gesehen auf der gleichen Seite der an beiden Auftreffstellen 4 und 7 auftreffenden Innenstege XII stärker ausgekehlt als auf der anderen Seite, so ist gewährleistet, daß durch Drehen eines der zwei Kernreaktorbrennelemente entsprechend FIG 2 um maximal 270° um die Längsachse sich eine Konfiguration entsprechend FIG 4 ergibt, wenn diese beiden Brennelemente nebeneinander in dem Reaktorkern angeordnet werden. Das gleiche gilt, wenn sich bei beiden Abstandhaltern VI nach FIG 2 die zweite Fahne XVII an der Auftreffstelle 7 an einem anderen Außensteg XI als die erste Fahne XVII befindet.

Wenn sich aber an allen N=10 Auftreffstellen von Innenstegen XII an den vier Außenstegen XI beider in gleicher Höhe befindlicher Abstandhalter VI der Kernreaktorbrennelemente nach FIG 2 gleich ausgebildete Fahnen XVII wie in FIG 4 dargestellt befinden und ihre Flanken in dem vorgegebenen (somit für beide Abstandhalter VI gleichen) Umlaufsinn um den betreffenden Abstandhalter VI gesehen auf der gleichen Seite des auftreffenden Innensteges XII stärker ausgekehlt sind als auf der anderen Seite dieses Innensteges XII, ist gewährleistet, daß sich die Konfiguration nach FIG 4 automatisch für alle Fahnenpaare ergibt, wenn diese Kernreaktorbrennelemente im Reaktorkern im Schachbrettmuster nebeneinander angeordnet werden.

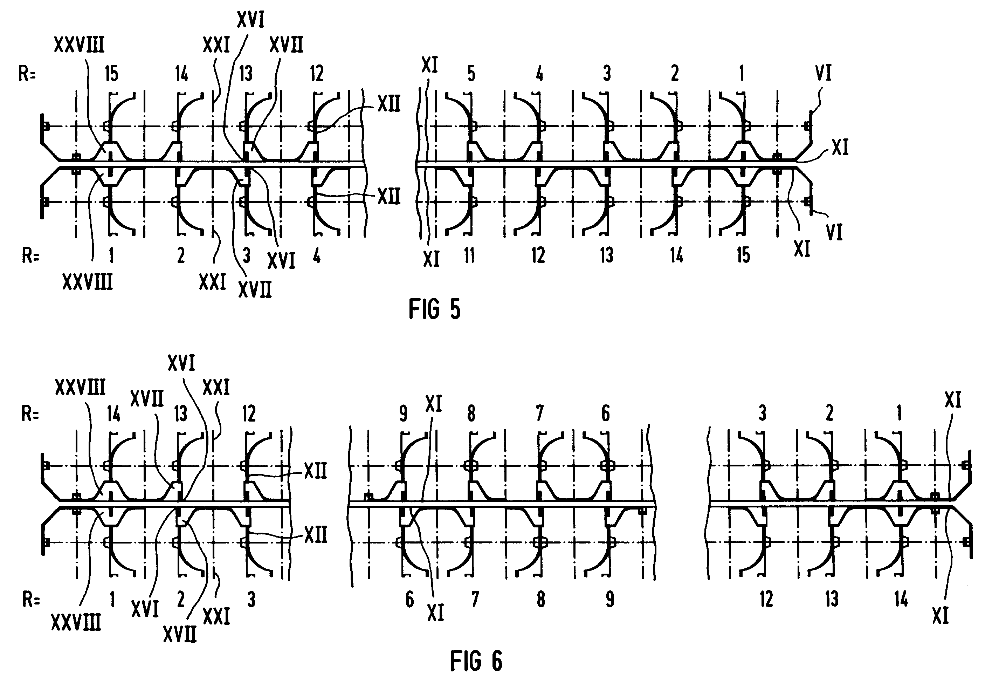

Wie FIG 5 zeigt, sind bei einer anderen Ausführungsform der Erfindung die flach aneinander anliegenden, sich überdeckenden Außenstege XI von gitterförmigen Abstandhaltern VI zweier Kernreaktorbrennelemente, die in einem Reaktorkern nebeneinander angeordnet sind, gleich ausgebildet. An jedem Außensteg XI treffen insgesamt 15 äquidistante Innenstege XII rechtwinklig auf und bilden an der Innenseite des betreffenden Innensteges XI quadratische Gittermaschen zum Aufnehmen eines Brennstabes oder eines Steuerstabführungsrohres. Die N=15 äquidistanten Auftreffstellen XVI der Innenstege XII auf die Außenstege XI sind ausgehend von einem Stegende des betreffenden Außensteges gezählt. Auch die anderen drei Außenstege der beiden gitterförmigen Abstandhalter VI sind vorteilhafterweise gleich ausgebildet wie die dargestellten Außenstege XI. Die Auftreffstellen XVI an allen vier Außenstegen jedes gitterförmigen Abstandhalters sind in einem gleichen vorgegebenen Umlaufsinn um den betreffenden Abstandhalter gezählt.

Die Zahl N=15 der Auftreffstellen XVI von Innenstegen XII an der Innenseite der Außenstege XI ist ungerade. Demgemäß befinden sich Fahnen XVII an allen Auftreffstellen R mit A=2 $\leq$ R $\leq$ B = N-1= 15-1 = 14. Die Fahnen XVII sind ferner an benachbarten Auftreffstellen R und R+1 mit 2 $\leq$ R $\leq$ N-2 = 15-2 = 13 symmetrisch zu der Mittelebene XXI zwischen den an diesen beiden Auftreffstellen R und R+1 auftreffenden Innenstegen XII.

Die Fahnen XVII in FIG 5 sind genauso ausgebildet wie die Fahnen XVII in FIG 4, d.h. sie sind jeweils an der Kante des Außensteges XI am Abströmende des Abstandhalters VI mit je einer Flanke auf jeder Seite des betreffenden, an den Außensteg XI auftreffenden Innensteges XII ausgebildet. Im Falle der FIG 5 ist die Flanke einer ersten Fahne an beiden Außenstegen XI an einer Auftreffstelle R mit A = 2 $\leq$ R $\leq$ B = 14 und die Flanke einer zweiten Fahne XVII an einer Auftreffstelle N-R + 1 = 15-R + 1 = 16-R im gleichen vorgegebenen Umlaufsinn um den betreffenden Abstandhalter VI gesehen auf der gleichen Seite des auftreffenden Innensteges XII stärker ausgekehlt als auf der anderen Seite dieses Innensteges XII. An der stärker ausgekehlten Flanke ist die Auskehlung in Form eines rechten Winkels geschnitten, dessen einer Schenkel von der Kante des Außensteges XI gebildet ist und dessen anderer Schenkel parallel zu bzw. in der Ebene liegt, die von der Seitenfläche des betreffenden Innensteges XII bestimmt ist.

Die Fahne XVII beispielsweise an der Auftreffstelle R=4 des in FIG 5 oberen Außensteges XI und die Fahne XVII an der Auftreffstelle N-R+1=15-4+1=12 dieses oberen Außensteges XI sind auf der gleichen Seite des jeweils auftreffenden Innensteges XII gesehen im gleichen vorgegebenen Umlaufsinn um den Abstandhalter VI mit der in Form eines rechten Winkels geschnittenen Auskehlung versehen. Ferner ist die Anzahl N der Auftreffstellen XVI ungerade. Damit sind die Fahnen an den Auftreffstellen R=4 und R+1=5 und ebenso an den Auftreffstellen N-R+1=15-4+1=12 und N-(R+1)+1=15-5+1=11 symmetrisch zu der Mittelebene XXI zwischen den an diesen beiden Auftreffstellen auftreffenden Innenstegen XII ausgebildet. Es gilt aber auch, daß die Fahnen an den Auftreffstellen R=3 und R+1=4 und die Fahnen an den Auftreffstellen N-R+1=15-3+1=13 und N-(R+1)+1=15-4+1=12 symmetrisch zu der Mittelebene XXI zwischen den an diesen beiden Auftreffstellen auftreffenden Innenstegen XII ausgebildet sind.

Hinsichtlich des in FIG 5 unteren Außensteges XI gilt dasselbe wie hinsichtlich des oberen Außensteges XI. Damit bilden eine Fahne XVII am oberen Außensteg XI nach FIG 5 und eine dieser Fahne XVII gegenüberliegende Fahne XVII am unteren Außensteg XI ein Fahnenpaar und bewirken einen Drall in flüssigem Kühlmittel, das einen Reaktorkern rechtwinklig zur Zeichenebene von FIG 5 von deren Unterseite zur Oberseite durchströmt. Dieser Drall hat eine Drehrichtung, die entgegengesetzt zu der Drehrichtung des Dralls ist, den die Fahnen XVII benachbarter Fahnenpaare im durchströmenden Kühlmittel erzeugen. Dadurch wird eine verbesserte Wärmeabfuhr durch das Kühlmittel von den Brennstäben erzielt, die sich in den Maschen der gitterförmigen Abstandhalter VI an den Außenstegen XI befinden.

Beide Außenstege XI nach FIG 5 haben ferner an den Auftreffstellen R=1 und R=15 Fahnen XXVIII, die zwar auch zur Innenseite des betreffenden Außensteges XI hin geneigt sind, die aber günstigerweise symmetrisch zum auftreffenden Innensteg XII ausgebildet sind. Dadurch können diese Fahnen ein gegenseitiges Verhaken von benachbarten Kernreaktorbrennelementen an den Ecken der Abstandhalter VI verhindern, wenn sich diese beim Be- oder beim Entladen des Reaktorkerns nebeneinander befinden und eine Relativbewegung zueinander in ihrer Länsgsrichtung durchführen.

In FIG 6 sind gleiche Teile mit gleichen Bezugszeichen wie in FIG 5 versehen, und es ist eine Ausführung wie in FIG 5 dargestellt, jedoch mit dem Unterschied, daß die Anzahl N=14 der Auftreffstellen XVI von äquidistanten Innenstegen XII an die Außenstege XI gerade ist. Dementsprechend sind die Fahnen XVII an den Auftreffstellen R und R+1 mit $2 \leqq R \leqq (N/2)-1=(14/2)-1=6$ und $(N/2)+1=(14/2)+1=8 \leqq R \leqq N-2=14-2=12$ symmetrisch zu der Mittelebene XXI zwischen den betreffenden, jeweils an die Außenstege XI auftreffenden Innenstegen XII ausgebildet. Auch dadurch wird bewirkt, daß ein durch eine Fahne XVII am oberen Außensteg XI und eine gegenüber befindliche Fahne XVII am unteren Außensteg XI gebildetes Fahnenpaar einen Drall in dem den Reaktorkern durchströmenden Kühlmittel erzeugen, dessen Drehrichtung entgegengesetzt gerichtet zu der Drehrichtung des Dralls ist, den diesem Fahnenpaar benachbarte Fahnenpaare im durchströmenden Kühlmittel erzeugen. Nur die einander benachbarten Fahnenpaare an den Auftreffstellen $\frac{N}{2} = 7$ und $\frac{N}{2} + 1 = 8$ erzeugen in dem durchströmenden Kühlmittel einen Drall mit gleicher Drehrichtung.

**Patentansprüche**

1.  Reaktorkern eines Kernreaktors mit zwei flach und eng nebeneinander stehenden, insbesondere aneinander anliegenden parallelen Außenstegen zweier gitterförmiger Abstandhalter für zueinander parallele Stäbe, von denen der eine Abstandhalter einem ersten Einsatzelement und der andere Abstandhalter einem zweiten Einsatzelement zugehörig ist, mit zwei sich gegenüber befindlichen, voneinander weggeneigten Fahnen, die sich am Abströmende der beiden Abstandhalter für ein in Längsrichtung der Stäbe fließendes Kühlmittel befinden und von denen die eine Fahne zwischen zwei Stäben an der Kante des einen Außensteges und die andere Fahne zwischen zwei Stäben an der Kante des anderen Außensteges angebracht ist,
    **dadurch gekennzeichnet,**
    daß die beiden Flanken jeder der beiden Fahnen (XVII) verschieden ausgebildet sind derart, daß sie keine zu den Stäben parallele und dem Außensteg rechtwinklige Symmetrieebene haben, und daß sich jeweils eine Flanke der einen Fahne einer anders ausgebildeten Flanke der anderen Fahne gegenüber befindet.

2.  Einsatzelement, insbesondere Kernreaktorbrennelement, für einen Reaktorkern, das in einem Elementquerschnitt einen quadratischen, gitterförmigen Abstandhalter (VI) mit zueinander parallelen Stäben, insbesondere mit Kernbrennstoff gefüllten Brennstäben (VIII), aufweist, mit vier hochkant angeordneten Außenstegen (XI), die paarweise zueinander parallel sind, mit sich rechtwinklig hochkant durchsetzenden Innenstegen (XII; XIII), die Maschen (XIV) für die parallelen Stäbe bilden und die jeweils zu einem Außenstegepaar parallel sind, mit N im wesentlichen äquidistanten Auftreffstellen (XVI) von Innenstegen (XII) an jedem Außensteg (XI) gezählt ausgehend von einem Stegende dieses Außensteges (XI) in einer Querschnittsebene des Abstandhalters (VI) in einem vorgegebenen Umlaufsinn um diesen Abstandhalter (VI) und

mit Fahnen (XVII), die jeweils an einer Kante eines Außensteges (XI) an demselben Ende des Abstandhalters (VI) an einer Auftreffstelle (XVI) eines Innensteges (XII) mit je einer Flanke auf jeder Seite dieses Innensteges (XII) ausgebildet und zur Innenseite der Außenstege (XI) hin geneigt sind,
**dadurch gekennzeichnet,**
daß die Flanke einer in bezug auf die Ebene des auftreffenden Innenstegs asymmetrischen ersten Fahne (XVII) an einem Außensteg (XI) an einer Auftreffstelle R mit A ≦ R ≦ B und die Flanke einer in bezug auf die Ebene des auftreffenden Innenstegs asymmetrischen zweiten Fahne (XVII) an einem Außensteg (XI) an einer Auftreffstelle N - R + 1 im vorgegebenen Umlaufsinn um den Abstandhalter (VI) gesehen auf der gleichen Seite des auftreffenden Innensteges (XII) anders ausgebildet ist als auf der anderen Seite dieses Innensteges (XII).

3. Einsatzelement nach Anspruch 2,
**dadurch gekennzeichnet,**
daß A = 1 und B = N sind.

4. Einsatzelement nach Anspruch 2,
**dadurch gekennzeichnet,**
daß sich die erste und die zweite Fahne (XVII) an demselben Außensteg (XI) befinden.

5. Einsatzelement nach Anspruch 2,
**dadurch gekennzeichnet,**
daß sich die erste und die zweite Fahne (XVII) an verschiedenen Außenstegen (XI) befinden.

6. Einsatzelement nach Anspruch 2,
**dadurch gekennzeichnet,**
daß die erste Fahne und die zweite Fahne (XVII) im vorgegebenen Umlaufsinn um den Abstandhalter (VI) gesehen auf der gleichen Seite des auf den Außensteg (XI) auftreffenden Innensteges (XII) an der Flanke gleich ausgebildet sind.

7. Einsatzelement nach Anspruch 2,
**dadurch gekennzeichnet,**
daß die erste und die zweite Fahne (XVII) gleich ausgebildet sind.

8. Einsatzelement nach Anspruch 2,
**dadurch gekennzeichnet,**
daß die erste Fahne (XVII) und die zweite Fahne (XVII) im vorgegebenen Umlaufsinn um den Abstandhalter (VI) gesehen auf der gleichen Seite des auf den Außensteg (XI) auftreffenden Innensteges (XII) an der Flanke in Form eines rechten Winkels geschnitten ist, dessen einer Schenkel zur Seite des Innensteges (XII) wenigstens angenähert rechtwinklig und deren anderer Schenkel zu der durch die Seite des Innensteges (XII) bestimmten Ebene wenigstens annähernd parallel ist oder sich in dieser Ebene befindet.

9. Einsatzelement nach Anspruch 8,
**dadurch gekennzeichnet,**
daß der zur Seite des Innensteges (XII) wenigstens angenähert rechtwinklige Schenkel durch die Kante des Außensteges gebildet ist.

10. Einsatzelement nach Anspruch 3,
**dadurch gekennzeichnet,**
daß sich Fahnen an allen Auftreffstellen R mit A = 1 ≦ R ≦ B = N befinden und gleich ausgebildet sind.

11. Einsatzelement nach Anspruch 2,
dadurch gekennzeichnet,
daß sich an allen Auftreffstellen R mit A = 2 ≦ R ≦ B = N-1 eine Fahne (XVII) befindet und alle Fahnen (XVII) an diesen Auftreffstellen gleich ausgebildet sind und daß sich an den Auftreffstellen R = 1 und R = N jeweils eine Fahne (XXVIII) befindet, die symmetrisch zum auftreffenden Innensteg (XII) ist.

12. Einsatzelement nach Anspruch 11,
**dadurch gekennzeichnet,**
daß die Fahnen (XVII) an den Auftreffstellen R = 1 und R = N gleich ausgebildet sind.

13. Einsatzelement nach Anspruch 3,
**dadurch gekennzeichnet,**
daß sich Fahnen (XVII) an allen Auftreffstellen R mit A = 1 ≦ R ≦ B = N befinden, daß die Anzahl N der Auftreffstellen ungerade ist und daß benachbarte Fahnen (XVII) an den Auftreffstellen R und R+1 mit 1 ≦ R ≦ N-1 symmetrisch zu der Mittelebene (XXI) zwischen den beiden auftreffenden Innenstegen (XII) ausgebildet sind.

14. Einsatzelement nach Anspruch 3,
**dadurch gekennzeichnet,**
daß sich Fahnen (XVII) an allen Auftreffstellen R mit A = 1 ≦ R ≦ B = N befinden, daß die Anzahl N der Auftreffstellen gerade ist und daß Fahnen (XVII) an den Auftreffstellen R und R+1 mit 1 ≦ R ≦ (N/2)-1 und (N/2)+1 ≦ R ≦ N-1 symmetrisch zu der Mittelebene (XXI) zwischen den auftreffenden Innenstegen (XII) ausgebildet sind.

15. Einsatzelement nach Anspruch 2,
**dadurch gekennzeichnet,**

daß sich Fahnen (XVII) an allen Auftreffstellen R mit A = 2 ≦ R ≦ B = N-1 befinden,

daß die Anzahl N der Auftreffstellen ungerade ist,

daß die Fahnen (XVII) an den Auftreffstellen R und R+1 mit 2 ≦ R ≦ N-2 symmetrisch zu der Mittelebene (XXI) zwischen den beiden auftreffenden Innenstegen (XII) ausgebildet sind und

daß sich an den Auftreffstellen R=1 und R=N jeweils eine Fahne (XXVIII) befindet, die symmetrisch zum auftreffenden Innensteg (XII) ausgebildet ist.

16. Einsatzelement nach Anspruch 15,
   **dadurch gekennzeichnet,**
   daß die Fahnen (XXVIII) an den Auftreffstellen R=1 und R=N gleich ausgebildet sind.

17. Einsatzelement nach Anspruch 2,
   **dadurch gekennzeichnet,**
   daß sich Fahnen an allen Auftreffstellen R mit A = 2 ≦ R ≦ B = N-1 befinden,
   daß die Anzahl N der Auftreffstellen gerade ist,
   daß Fahnen an den Auftreffstellen R und R+1 mit 2 ≦ R ≦ (N/2)-1 und (N/2)+1 ≦ R ≦ N-2 symmetrisch zu der Mittelebene (XXI) zwischen den auftreffenden Innenstegen (XII) ausgebildet sind und
   daß sich an den Auftreffstellen R=1 und R=N jeweils eine Fahne (XXVIII) befindet, die symmetrisch zum auftreffenden Innensteg (XII) ist.

18. Einsatzelement nach Anspruch 17,
   **dadurch gekennzeichnet,**
   daß alle Fahnen (XXVIII) an den Auftreffstellen R=1 und R=N gleich ausgebildet sind.

## Claims

1. Reactor core of a reactor with two parallel outer bars of two grid-shaped spacers for rods parallel to one another, the outer bars standing next to one another flatly and closely, in particular abutting one another, the one spacer belonging to a first insert element and the other spacer belonging to a second insert element, having two lugs located opposite one another and inclined away from one another, which are located at the trailing end of the two spacers for a coolant flowing in the longitudinal direction of the rods and one lug being fitted between two rods at the edge of the one outer bar and the other lug being fitted between two rods at the edge of the other outer bar, characterized in that the two flanks of each of the two lugs (XVII) are constructed differently in such a way that they do not have a plane of symmetry which is parallel to the rods and at right angles to the outer bar, and in that in each case one flank of the one lug is located opposite a differently formed flank of the other lug.

2. Insert element, in particular a reactor fuel element, for a reactor core, which in an element cross section has a square, grid-shaped spacer (VI) with rods parallel to one another, in particular fuel rods (VIII) filled with nuclear fuel, having four outer bars (XI) arranged edgeways and being parallel to one another in pairs, having inner bars (XII; XIII) crossing at right angles edgeways and forming meshes (XIV) for the parallel rods and being in each case parallel to a pair of outer bars, having N substantially equidistant impact points (XVI) of inner bars (XII) at each outer bar (XI) counted proceeding from one bar end of this outer bar (XI) in a plane of cross section of the spacer (VI) in a specified circumferential direction about this spacer (VI) and having lugs (XVII) which are constructed in each case at one edge of an outer bar (XI) at the same end of the spacer (VI) at an impact point (XVI) of an inner bar (XII) with in each case a flank on each side of this inner bar (XII) and are inclined towards the inner side of the outer bars (XI), characterized in that the flank of a first lug (XVII), which is asymmetrical in relation to the plane of the striking inner bar, at an outer bar (XI) at an impact point R with A ≦ R ≦ B and the flank of a second lug (XVII), which is asymmetrical in relation to the plane of the striking inner bar, at an outer bar (XI) at an impact point N - R + 1, seen in the specified circumferential direction about the spacer (VI), is constructed on the same side of the striking inner bar (XII) differently to the other side of this inner bar (XII).

3. Insert element according to claim 2, characterized in that A = 1 and B = N.

4. Insert element according to claim 2, characterized in that the first and the second lug (XVII) are located at the same outer bar (XI).

5. Insert element according to claim 2, characterized in that the first and the second lug (XVII) are located at different outer bars (XI).

6. Insert element according to claim 2, characterized in that the first lug and the second lug (XVII), seen in the specified circumferential direction about the spacer (VI), are constructed the same at the flank on the same side of the inner bar (XII) striking the outer bar (XI).

7. Insert element according to claim 2, characterized in that the first and the second lug (XVII) are constructed the same.

8. Insert element according to claim 2, characterized in that the first lug (XVII) and the second lug (XVII), seen in the specified circumferential direction about the spacer (VI), on the same side of the inner bar (XII) striking the outer bar (XI) at the flank is cut in the form of a right angle, the one side of which is at least approximately at right angles to the side of the inner bar (XII) and the other side of which is at least approximately parallel to the plane defined by the side of the inner bar (XII) or is located in this plane.

9. Insert element according to claim 8, characterized in that the side which is at least approximately at right angles to the side of the inner bar (XII) is formed by the edge of the outer bar.

10. Insert element according to claim 3, characterized in that lugs are located at all impact points R with A = 1 $\leqq$ R $\leqq$ B = N and are constructed the same.

11. Insert element according to claim 2, characterized in that at all impact points R with A = 2 $\leqq$ R $\leqq$ B = N-1 there is a lug (XVII) and all lugs (XVII) at these impact points are constructed the same and in that at the impact points R = 1 and R = N in each case there is a lug (XXVIII) which is symmetrical to the striking inner bar (XII).

12. Insert element according to claim 11, characterized in that the lugs (XVII) at the impact points R = 1 and R = N are formed the same.

13. Insert element according to claim 3, characterized in that lugs (XVII) are located at all impact points R with A = 1 $\leqq$ R $\leqq$ B = N, in that the number N of impact points is odd and in that adjacent lugs (XVII) at the impact points R and R+1 with 1 $\leqq$ R $\leqq$ N-1 are formed so as to be symmetrical to the centre plane (XXI) between the two striking inner bars (XII).

14. Insert element according to claim 3, characterized in that lugs (XVII) are located at all impact points R with A = 1 $\leqq$ R $\leqq$ B = N, in that the number N of impact points is even and in that lugs (XVII) at the impact points R and R+1 with 1 $\leqq$ R $\leqq$ (N/2)-1 and (N/2)+1 $\leqq$ R $\leqq$ N-1 are formed so as to be symmetrical to the centre plane (XXI) between the striking inner bars (XII).

15. Insert element according to claim 2, characterized in that lugs (XVII) are located at all impact points R with A = 2 $\leqq$ R $\leqq$ B = N-1, in that the number N of impact points is odd, in that the lugs (XVII) at the impact points R and R+1 with 2 $\leqq$ R $\leqq$ N-2 are formed so as to be symmetrical to the centre plane (XXI) between the two striking inner bars (XII) and in that at the impact points R=1 and R=N there is in each case a lug (XXVIII) which is formed so as to be symmetrical to the striking inner bar (XII).

16. Insert element according to claim 15, characterized in that the lugs (XXVIII) at the impact points R=1 and R=N are constructed the same.

17. Insert element according to claim 2, characterized in that lugs are located at all impact points R with A = 2 $\leqq$ R $\leqq$ B = N-1, in that the number N of impact points is even, in that lugs at the impact points R and R+1 with 2 $\leqq$ R $\leqq$ (N/2)-1 and (N/2)+1 $\leqq$ R $\leqq$ N-2 are formed so as to be symmetrical to the centre plane (XXI) between the striking inner bars (XII) and in that at the impact points R=1 and R=N there is in each case a lug (XXVIII) which is symmetrical to the striking inner bar (XII).

18. Insert element according to claim 17, characterized in that all lugs (XXVIII) at the impact points R=1 and R=N are constructed the same.

**Revendications**

1. Coeur d'un réacteur nucléaire comprenant deux parties pleines extérieures parallèles, posées à plat et étroitement l'une à côté de l'autre, en particulier adjacentes l'une à l'autre, de deux entretoises en forme de grille pour des crayons parallèles entre eux, l'une de ces entretoises appartenant à un premier assemblage rapporté et l'autre entretoise à un second assemblage rapporté, deux talons opposés l'un à l'autre et inclinés en s'éloignant l'un de l'autre, qui se trouvent à l'extrémité de sortie des deux entretoises pour l'évacuation d'un fluide de refroidissement s'écoulant dans la direction longitudinale des crayons et l'un de ces talons est disposé entre deux crayons à l'arête d'une entretoise et l'autre talon est disposé entre deux crayons à l'arête de l'autre entretoise, caractérisé en ce que les deux flancs de chacun des deux talons (XVII) sont différents, en n'étant pas parallèles aux crayons et en n'ayant pas de plan de symétrie à angle droit avec la partie pleine extérieure, et en ce que un des flancs d'un talon se trouve opposé à un flanc autrement constitué de l'autre talon.

2. Assemblage rapporté, notamment assemblage combustible d'un réacteur nucléaire, pour un coeur de réacteur, qui comprend, dans une coupe transversale d'assemblage, une entretoise (VI) carrée en forme de grille ayant deux crayons parallèles entre eux, en particulier des crayons (VIII) combustibles remplis de combustible nucléaire, ayant quatre parties pleines (XI) extérieurs sur champ, parallèles entre elles deux à deux,

ayant des parties pleines (XII, XIII) intérieures entrecroisées à angle droit, qui forment des mailles (XIV) pour les crayons parallèles et qui sont chacune parallèles à une paire de parties pleines extérieures,

ayant N points, sensiblement équidistants, de croisement (XVI), des parties pleines (XII) intérieures, avec chaque partie pleine (XI) extérieure, comptées à partir d'une extrémité de cette partie pleine (XI) extérieure dans un plan de coupe transversale de l'entretoise (VI) selon un sens de rotation donné à l'avance autour de cette entretoise (VI) et ayant des talons (XVII) qui sont chacun disposé à une arête d'une partie pleine (XI) extérieure à la même extrémité de l'entretoise (VI) en un point de croisement (XVI) d'une partie pleine (XI) intérieure avec un flanc de chaque côté de cette partie pleine (XI) intérieure et sont inclinés vers le côté intérieur de la partie pleine extérieure, caractérisé en ce que le flanc d'un premier talon (XVII) dissymétrique par rapport au plan de la partie pleine intérieure rencontrée sur une partie pleine extérieure (XI) en un point de croisement (R) avec A < R < B et le flanc d'un second talon (XVII), dissymétrique par rapport au plan de la partie pleine intérieure rencontrée, sur une partie pleine (XI) extérieure, en un point de croisement (N-R+1) considéré dans le sens de rotation donné à l'avance autour de l'entretoise (VI), sont constitués, du même côté de la partie pleine (XII) intérieure rencontrée, autrement que de l'autre côté de cette partie pleine (XII) intérieure.

3. Assemblage rapporté selon la revendication 2, caractérisé en ce que A est égal à 1 et B à N.

4. Assemblage rapporté selon la revendication 2, caractérisé en ce que le premier et le second talon (XVII) sont disposés sur la même partie pleine (XI) extérieure.

5. Assemblage rapporté selon la revendication 2, caractérisé en ce que le premier et le second talon (XVII) sont disposés sur des parties pleines (XI) différentes.

6. Assemblage rapporté selon la revendication 2, caractérisé en ce que le premier et le second talon (XVII), considérés dans le sens de rotation donné à l'avance autour de l'entretoise (VI), sont constitués de manière identique sur le flanc du même côté de la partie pleine (XII) intérieure rencontrant la partie pleine extérieure.

7. Assemblage rapporté selon la revendication 2, caractérisé en ce que le premier et le second talon (XVII) sont constitués de manière identique.

8. Assemblage rapporté selon la revendication 2, caractérisé en ce que le premier talon (XVII) et le second talon (XVII) considéré dans un sens de rotation donné à l'avance autour de l'entretoise (VI) sont coupés sur le flanc, du même côté de la partie pleine (XII) intérieure rencontrée sur la partie pleine extérieure, sous la forme d'un angle droit, dont une branche est au moins approximativement à angle droit avec le côté de la partie pleine (XII) intérieure et dont l'autre branche est parallèle au moins approximativement au plan déterminé par le côté de la partie pleine (XII) intérieure ou se trouve dans ce plan.

9. Assemblage rapporté selon la revendication 8, caractérisé en ce que la branche formant un angle au moins approximativement droit par rapport au côté de la partie pleine (XII) intérieure est constituée par l'arête de la partie pleine extérieure.

10. Assemblage rapporté selon la revendication 8, caractérisé en ce que des talons sont disposés à tous les points de croisement R, avec $A = 1 \leq R \leq B = N$ et sont constitués de manière identique.

11. Assemblage rapporté selon la revendication 2, caractérisé en ce que un talon (XVII) est disposé à chaque point de croisement tel que $A = 2 \leq R \leq B = N - 1$, tous les talons à ces points de croisement étant constitués de manière identique et en ce que, à chacun des points de croisement tels que R = 1 et R = N, se trouve un talon, et ces talons sont symétriques par rapport à la partie pleine (XII) intérieure rencontrée.

12. Assemblage rapporté selon la revendication 11, caractérisé en ce que les talons (XVII) aux points de croisement R = 1 et R = N sont constitués de manière identique.

13. Assemblage rapporté selon la revendication 3, caractérisé en ce que des talons (XVII) sont disposés à tous les points de croisement tels que $A = 1 \leq R \leq B = N$, en ce que le nombre N de points de croisement est impair et en ce que des talons (XVII) voisins des points de croisement R et R + 1, $1 \leq R \leq N - 1$, sont formés symétriquement par rapport au plan (XXI) médian qui se trouve entre les deux parties pleines (XII) intérieures rencontrées.

**14.** Assemblage rapporté selon la revendication 3, caractérisé en ce que des talons (XVII) sont disposés à tous les points de croisement R, tels que A = 1 ≦ R ≦ B = N, en ce que le nombre N de points de croisement est pair et en ce que des talons (XVII) aux points de croisement correspondant à R et R + 1, tels que 1 ≦ R ≦ [N/2] - 1 et [N/2] + 1 ≦ R ≦ N - 1 sont constitués symétriquement par rapport au plan (XXI) médian qui se trouve entre les parties pleines (XII) intérieure rencontrées.

**15.** Assemblage rapporté selon la revendication 2, caractérisé en ce que des talons (XVII) sont disposés à tous les points de croisement R, tels que A = 2 ≦ R ≦ B = N - 1, en ce que le nombre N de points de croisement est impair, en ce que les talons (XVII) correspondant aux points de croisement R et R + 1, tels que 2 < R < N - 2 sont constitués symétriquement par rapport au plan (XXI) médian qui se trouve entre les deux parties pleines (XII) intérieures et en ce que à chacun des points de croisement définis par R = 1 et R = N, se trouve un talon qui est constitué de façon symétrique par rapport à la partie pleine (XII) intérieure rencontrée.

**16.** Assemblage rapporté selon la revendication 15, caractérisé en ce que les talons (XXVIII) au points de croisement définis par R = 1 et R = N sont constitués de manière identique.

**17.** Assemblage rapporté selon la revendication 2, caractérisé en ce que des talons sont disposés à tous les points de croisement R définis par A = 2 ≦ R ≦ B = N - 1, en ce que le nombre de points de croisement est pair, en ce que des talons sont disposés aux points de croisement R et R + 1, définis par 2 ≦ R ≦ [N/2] - 1 et [N/2] + 1 ≦ R ≦ N - 2 symétriquement par rapport au plan (XXI) médian entre les parties pleines (XII) intérieures rencontrées et en ce que à chacun des points de croisement définis par R = 1 et R = N, se trouve un talon qui est symétrique par rapport à la partie pleine (XII) intérieure rencontrée.

**18.** Assemblage rapporté selon la revendication 17, caractérisé en ce que tous les talons (XXVIII) situés aux points de croisement définis par R = 1 et R = N sont constitués de manière identique.

FIG 1

FIG 2

FIG 3

FIG 4

FIG 5

FIG 6